# EUROPÄISCHE PATENTANMELDUNG

(11) **EP 4 844 346 A1**
(43) Veröffentlichungstag der Anmeldung: **25.11.2026**
(21) Anmeldenummer: 26179479.6
(22) Anmeldetag: 19.05.2026
(51) Int. Cl.: G01D 21/00, G01D 3/08

(54) **SENSORMODUL UND VERFAHREN ZUM BETREIBEN EINES SENSORMODULS**

(30) Priorität: 23.05.2025 DE 102025120296
(71) Anmelder: Festo SE & Co. KG, 73734 Esslingen (DE)
(72) Erfinder: Bohm, Holger, 73072 Donzdorf (DE); Rieder, Wolfgang, 73732 Esslingen (DE)
(74) Vertreter: Patentanwälte Magenbauer & Kollegen Partnerschaft mbB

(57) **Zusammenfassung**

Die Erfindung betrifft Sensormodul (1) mit wenigstens einem Sensor (2), der zur Erfassung und Umwandlung einer physikalischen Größe, insbesondere aus der Gruppe: Druck, Temperatur, Magnetfeldstärke, Volumenstrom, Massenstrom, in ein elektrisches Sensorsignal ausgebildet ist, mit einer Verarbeitungseinrichtung (4), die zur Verarbeitung des elektrischen Sensorsignals in ein elektrisches Ausgabesignal ausgebildet ist und die eine Stromquelle (9) und eine Spannungsquelle (10) aufweist, und die in einem ersten Betriebszustand für eine Stromausgabe in Abhängigkeit von einem Signalpegel des Ausgabesignals und in einem zweiten Betriebszustand für eine Spannungsausgabe in Abhängigkeit von dem Signalpegel des Ausgabesignals ausgebildet ist und die elektrisch mit einem ersten Ausgabeanschluss (18) einer Schnittstelle (5), die zur Ankopplung eines Signalempfängers (93) ausgebildet ist, verbundenen ist, wobei die Verarbeitungseinrichtung (4) für eine Umschaltung vom ersten Betriebszustand in den zweiten Betriebszustand ausgebildet ist, wenn die Stromausgabe innerhalb eines vorgegebenen ersten Zeitintervalls unterhalb eines vorgegebenen Strompegels verbleibt.

## Beschreibung

Die Erfindung betrifft ein Sensormodul und ein Verfahren zum Betreiben eines Sensormoduls.

Die DE 10 2012 007 417 A1 offenbart ein Sensormodul mit wenigstens einem Sensor zur Erfassung und Umwandlung einer physikalischen Größe in ein elektrisches Sensorsignal, mit einer elektrischen Schnittstelle, die zur Bereitstellung des Sensorsignals an eine Verarbeitungseinrichtung ausgebildet ist, wobei der elektrischen Schnittstelle eine Signalverarbeitungseinrichtung zugeordnet ist, die zur umschaltbaren Bereitstellung des Sensorsignals an einem Schnittstellenkontakt der Schnittstelle wahlweise als positives binäres Spannungssignal PNP oder als negatives binäres Spannungssignal NPN ausgebildet ist und/oder die zur umschaltbaren Bereitstellung des Sensorsignals an einem Schnittstellenkontakt der Schnittstelle wahlweise als analoges Spannungssignal oder als analoges Stromsignal ausgebildet ist, wobei die Signalverarbeitungseinrichtung für eine zusätzliche Bereitstellung des Sensorsignals am jeweiligen Schnittstellenkontakt in Form eines digitalen Spannungssignals ausgebildet ist.

Die Aufgabe der Erfindung besteht darin, ein Sensormodul und ein Verfahren zum Betreiben eines Sensormoduls bereitzustellen, mit denen eine einfache Kopplung an eine übergeordnete Steuerung wie beispielsweise eine speicherprogrammierbare Steuerung, ermöglicht wird.

Diese Aufgabe wird für ein Sensormodul dadurch gelöst, dass das Sensormodul wenigstens einen Sensor zur Erfassung und Umwandlung einer physikalischen Größe, insbesondere aus der Gruppe: Druck, Temperatur, Magnetfeldstärke, Volumenstrom, Massenstrom, in ein elektrisches Sensorsignal und eine Verarbeitungseinrichtung zur Verarbeitung des elektrischen Sensorsignals in ein elektrisches Ausgabesignal und eine Stromquelle und eine Spannungsquelle aufweist, wobei die Verarbeitungseinrichtung in einem ersten Betriebszustand für eine Stromausgabe in Abhängigkeit von einem Signalpegel des Ausgabesignals und in einem zweiten Betriebszustand für eine Spannungsausgabe in Abhängigkeit von dem Signalpegel des Ausgabesignals ausgebildet ist und elektrisch mit einem ersten Ausgabeanschluss einer Schnittstelle, die zur Ankopplung eines Signalempfängers ausgebildet ist, verbunden ist, wobei die Verarbeitungseinrichtung für eine Umschaltung vom ersten Betriebszustand in den zweiten Betriebszustand ausgebildet ist, wenn die Stromausgabe innerhalb eines vorgegebenen ersten Zeitintervalls unterhalb eines vorgegebenen Strompegels verbleibt.

Das Sensormodul bildet eine elektronische Baugruppe, die als wesentliche Komponenten den Sensor, die Verarbeitungseinrichtung, die Stromquelle, die Spannungsquelle und die Schnittstelle umfasst. Das Sensormodul ist dazu ausgebildet, eine physikalische Größe, beispielsweise einen Druck eines Fluids, eine Temperatur eines Fluids oder eines Gegenstands, eine Magnetfeldstärke eine Magnetfeldspule oder eines Permanentmagneten, einen Volumenstrom eines Fluids oder einen Massenstrom eines Fluids zu bestimmen. Beispielhaft kann das Sensormodul als Temperatursensor oder als Drucksensor oder als Positionssensor oder als Volumenstromsensor oder als Massenstromsensor in einer Produktionsanlage eingesetzt werden, wobei das Sensormodul über die Schnittstelle und eine daran angeschlossenen Kabelverbindung mit einer übergeordneten Steuerung, insbesondere einer speicherprogrammierbaren Steuerung (SPS) verbunden ist. Um eine einfache handhabbare und kostengünstige Kommunikation zwischen dem Sensormodul und der übergeordneten Steuerung zu ermöglichen, ist das Sensormodul zur Bereitstellung eines Strompegels innerhalb eines vorgegebenen Stromintervalls und eines Spannungspegels innerhalb eines vorgegebenen Spannungsintervalls ausgebildet, wobei ein Ausgabesignal, das von dem Betrag der ermittelten physikalischen Größe abhängt, vorzugsweise in einer proportionalen Beziehung zum jeweiligen Strompegel oder Spannungspegel steht, der an der Schnittstelle bereitgestellt wird.

Für die jeweils ausschließliche (alternative) Bereitstellung des Strompegels und des Spannungspegels an der Schnittstelle umfasst das Sensormodul die Stromquelle und die Spannungsquelle. Die Stromquelle und/oder die Spannungsquelle können als integraler Bestandteil der Verarbeitungseinrichtung ausgebildet sein oder als diskrete Bauelemente oder Baugruppen von elektrischen Bauelementen verwirklicht werden. Eine Bereitstellung eines Strompegels an der Schnittstelle wird auch als erster Betriebszustand des Sensormoduls bezeichnet. Eine Bereitstellung eines Spannungspegels an der Schnittstelle wird auch als zweiter Betriebszustand des Sensormoduls bezeichnet.

Die Verarbeitungseinrichtung ist vorzugsweise als Mikroprozessor oder Mikrocontroller ausgebildet, auf dem ein Computerprogramm abläuft, mit dessen Hilfe die Auswertung des elektrischen Sensorsignals des Sensors sowie die daraus resultierende Bereitstellung des Ausgabesignals durchgeführt wird. Beispielhaft ist vorgesehen, dass die Verarbeitungseinrichtung das von der ermittelten physikalischen Größe abhängige Ausgabesignal als Steuersignale an die Stromquelle oder die Spannungsquelle bereitstellt, um dadurch die Freigabe eines korrespondierenden Strompegels oder eines korrespondierenden Spannungspegels zu bewirken.

Um die Handhabung des Sensormoduls in der Praxis zu vereinfachen, ist die Verarbeitungseinrichtung für eine automatische Anpassung des Betriebszustands an Eigenschaften eines Signalempfängers, der an der Schnittstelle angeschlossen ist, ausgebildet. Bei diesem Signalempfänger handelt es sich typischerweise um eine übergeordnete Steuerung wie beispielsweise eine speicherprogrammierbare Steuerung. Der Signalempfänger kann für einen Empfang des Ausgabesignals in Form des Strompegels oder des Spannungspegels ausgebildet sein und weist hierzu einen Eingangsanschluss auf, der über eine Kabelverbindung mit der Schnittstelle des Sensormoduls verbunden werden kann. Der Eingangsanschluss ist im Hinblick auf seine elektrischen Eigenschaften entweder auf den Empfang eines Stromsignals oder auf den Empfang eines Spannungssignals eingerichtet, eine Kommunikation mit dem Sensormodul ist nur dann möglich, wenn das Ausgabesignal des Sensormoduls in der richtigen Kommunikationsform (Stromsignal oder Spannungssignal) bereitgestellt wird. Dementsprechend muss für eine Kommunikation mit dem Sensormodul die Auswahl der korrekten Kommunikationsform durch das Sensormodul getroffen werden, wobei diese Auswahl automatisiert erfolgt.

Für diese automatisierte Auswahl ist vorgesehen, dass die Verarbeitungseinrichtung für den Fall, dass keine Informationen über die korrekte Kommunikationsform mit dem Signalempfänger vorliegen, zunächst eine Kommunikation mit dem Signalempfänger über eine Stromausgabe vornimmt. Sofern hierdurch eine Kommunikation mit dem Signalempfänger etabliert werden kann, findet die Bereitstellung von Ausgangssignalen im ersten Betriebszustand des Sensormoduls statt. Kann hingegen keine Kommunikation mit dem Signalempfänger etabliert werden, nimmt die Verarbeitungseinrichtung eine Umschaltung vor, um an der Stelle des ersten Betriebszustands den zweiten Betriebszustand für das Sensormodul vorzugeben, sodass die Ausgabesignale nachfolgend als Spannungspegel ausgegeben werden.

Um eine Entscheidung darüber treffen zu können, ob eine Umschaltung zwischen dem ersten Betriebszustand und dem zweiten Betriebszustand vorzunehmen ist, findet in der Verarbeitungseinrichtung eine Betrachtung der Stromausgabe innerhalb eines vorgegebenen ersten Zeitintervalls statt. Sofern der an der Schnittstelle bereitgestellte Strompegel innerhalb dieses ersten Zeitintervalls unterhalb eines vorgegebenen Strompegels verbleibt, ist davon auszugehen, dass am Signalempfänger eine elektrische Beschaltung vorliegt, die auf einen Empfang des Ausgabesignals als Spannungspegel gerichtet ist, sodass ein sehr hoher Eingangswiderstand vorliegt. Aufgrund dieses hohen Eingangswiderstands kann die Stromquelle im Sensormodul nicht den von der Verarbeitungseinrichtung vorgegebenen Strompegel an der Schnittstelle bereitstellen, sodass nach Ablauf des ersten Zeitintervalls die Umschaltung in den zweiten Betriebszustand vorgenommen wird. Das vorgegebene erste Zeitintervall kann mehrere Sekunden umfassen, bevorzugt ist vorgesehen, dass das vorgegebene erste Zeitintervall weniger als 1 Sekunde umfasst.

Vorteilhafte Weiterbildungen der Erfindung sind Gegenstand der Unteransprüche.

Zweckmäßig ist es, wenn die Verarbeitungseinrichtung für eine Umschaltung vom zweiten Betriebszustand in den ersten Betriebszustand ausgebildet ist, wenn die Spannungsausgabe innerhalb eines vorgegebenen zweiten Zeitintervalls oberhalb eines vorgegebenen Spannungspegels verbleibt. Hierbei liegt die Überlegung zugrunde, dass die Kabelverbindung zwischen dem Sensormodul und dem Signalempfänger während des laufenden Betriebs des Sensormoduls unterbrochen wird, wodurch ein Spannungsanstieg an der Schnittstelle eintritt. Sofern dieser Spannungsanstieg während eines vorgegebenen zweiten Zeitintervalls oberhalb eines vorgegebenen Spannungspegels liegt, wird aus Sicherheitsgründen eine Umschaltung vom zweiten Betriebszustand in den ersten Betriebszustand vorgenommen. Hierdurch wird vermieden, dass das Sensormodul nach erneuter Herstellung einer Kabelverbindung mit einem Signalempfänger, der nunmehr zum Empfang des Ausgabesignals als Strompegel ausgebildet ist, zu einer Beschädigung des Signalempfängers führt. Sollte der Signalempfänger zum Empfang des Ausgabesignals als Spannungspegel ausgebildet sein, erfolgt ohnehin nach Ablauf des ersten Zeitintervalls die Umschaltung in den zweiten Betriebszustand, sodass dann ebenfalls eine ordnungsgemäße Kommunikation mit dem Signalempfänger gewährleistet ist.

Bevorzugt ist vorgesehen, dass die Verarbeitungseinrichtung einen Betriebszustandsspeicher aufweist, der für eine Speicherung des jeweils aktuellen Betriebszustands ausgebildet ist. Der im Betriebszustandsspeicher gespeicherte aktuelle Betriebszustand des Sensormoduls kann beispielsweise für den Fall genutzt werden, dass eine Stromversorgung für das Sensormodul unterbrochen wird, um bei einer anschließenden Inbetriebnahme des Sensormoduls möglichst schnell ein Ausgabesignal in der richtigen Kommunikationsform (Stromsignal oder Spannungssignal) bereitstellen zu können, ohne dass hierfür zunächst das Verstreichen des ersten Zeitintervalls abgewartet werden muss. Bevorzugt ist vorgesehen, dass immer dann einen Schreibzugriff auf den Betriebszustandsspeicher vorgenommen wird, wenn eine Umschaltung zwischen den beiden Betriebszuständen des Sensormoduls vorgenommen wird. Zusätzlich zu den vorstehend beschriebenen Methoden zur automatisierten Anpassung des Betriebszustands kann vorgesehen sein, dass der Betriebszustand und damit auch der im Betriebszustandsspeicher gespeicherte Zustandswert über ein am Sensormodul ausgebildetes Eingabemittel, beispielsweise einen Tastschalter, oder über einen Umschaltbefehl, der von einer übergeordneten Steuerung an die Schnittstelle des Sensormoduls bereitgestellt wird, verändert wird.

Vorteilhaft ist es, wenn der Stromquelle ein Stromsensor zugeordnet ist, der für eine Bereitstellung eines Stromsignals an die Verarbeitungseinrichtung ausgebildet ist. Die Stromquelle kann entweder als integraler Bestandteil der Verarbeitungseinrichtung oder als diskretes Bauelement oder als elektrische Schaltungsbaugruppe, die mehrere elektrische Bauelemente umfasst, ausgebildet sein. Die Stromquelle kann einen integrierten Stromsensor aufweisen, der auch als interner Feedbackkanal bezeichnet wird, der unmittelbar einen Betrag eines von der Stromquelle bereitgestellten Strompegels an die Verarbeitungseinrichtung bereitstellen kann. Alternativ kann zwischen der Stromquelle und dem ersten Ausgabeanschluss der Schnittstelle ein auch als Shuntwiderstand bezeichneter Messwiderstand angeordnet sein, an dem beispielsweise unter Verwendung eines Differenzverstärkers ein Spannungsabfall ermittelt wird, der als Stromsignal an die Verarbeitungseinrichtung bereitgestellt wird und dort zu einem Strompegel umgerechnet wird. Mit dem Stromsensor kann eine Stromregelung für den an der Schnittstelle bereitzustellenden Strompegel vorgenommen werden.

Bei einer Weiterbildung der Erfindung ist vorgesehen, dass der Spannungsquelle ein Spannungssensor zugeordnet ist, der für eine Bereitstellung eines Spannungssignals an die Verarbeitungseinrichtung ausgebildet ist. Vorzugsweise weist die Spannungsquelle ein integriertes Voltmeter auf. Mit dem Spannungssensor kann eine Spannungsregelung für den an der Schnittstelle bereitzustellenden Spannungspegel vorgenommen werden.

In weiterer Ausgestaltung der Erfindung ist vorgesehen, dass die Schnittstelle einen zweiten Ausgabeanschluss aufweist, der mit der Verarbeitungseinrichtung elektrisch verbunden ist und der zur Bereitstellung eines Ausgabesignals aus der Gruppe: IO-Link, PNP-Schaltsignal, NPN-Schaltsignal, ausgebildet ist und/oder dass die Schnittstelle einen ersten Versorgungsanschluss und einen zweiten Versorgungsanschluss für eine elektrische Versorgung der Verarbeitungseinrichtung aufweist. Mit dem zweiten Ausgabeanschluss kann das Ausgabesignal in weiteren Ausgabeformaten an den Signalempfänger bereitgestellt werden. Mit dem ersten und zweiten Versorgungsanschluss wird eine elektrische Versorgung des Sensormoduls über die Schnittstelle ermöglicht.

Zweckmäßig ist es, wenn die Verarbeitungseinrichtung im ersten Betriebszustand für eine Stromausgabe in einem Intervall von 4 mA bis 20 mA und im zweiten Betriebszustand für eine Spannungsausgabe in einem Intervall von 0 Volt bis 10 Volt ausgebildet ist.

Die Aufgabe der Erfindung wird für ein Verfahren zum Betreiben eines Sensormoduls mit den nachfolgenden Schritten gelöst: Bereitstellen eines Prüfbefehls von einer Verarbeitungs-einrichtung des Sensormoduls an eine Stromquelle des Sensormoduls, Bereitstellen eines Prüfstroms von der Stromquelle an einen ersten Ausgabeanschluss einer Schnittstelle des Sensormoduls, die zur Ankopplung eines Signalempfängers ausgebildet ist, Erfassen eines Prüfstrompegels mit der Verarbeitungseinrichtung und Vergleichen des erfassten Prüfstrompegels mit einem in der Verarbeitungseinrichtung gespeicherten Sollstrompegel, Aktivieren eines ersten Betriebszustands, bei dem ein Ausgabesignal als Strompegel an der Schnittstelle bereitgestellt wird, wenn der Prüfstrompegel innerhalb eines vorgegebenen ersten Zeitintervalls über dem Sollstrompegel liegt oder Aktivieren eines zweiten Betriebszustands, bei dem das Ausgabesignal als Spannungspegel an der Schnittstelle bereitgestellt wird, wenn der Prüfstrompegel innerhalb eines vorgegebenen ersten Zeitintervalls unter dem Sollstrompegel liegt.

Der Prüfbefehl, der von der Verarbeitungseinrichtung an die Stromquelle bereitgestellt wird, kann darauf ausgerichtet sein, dass ein Prüfstrom von der Stromquelle an den ersten Ausgabeanschluss der Schnittstelle bereitgestellt wird, der innerhalb eines Stromstärkeintervalls mit den Intervallgrenzen 4 mA und 20 mA liegt. Alternativ kann der Prüfbefehl darauf ausgerichtet sein, dass der Prüfstroms unterhalb der Intervallgrenze 4 mA liegt, beispielsweise 2 mA beträgt, sodass der Signalempfänger nicht mit einem Strompegel beaufschlagt wird, der als gültiger Messwert interpretiert werden kann.

Mit der Bereitstellung des Prüfbefehls an die Stromquelle nimmt die Verarbeitungseinrichtung eine Erfassung eines tatsächlich an die Schnittstelle bereitgestellten Prüfstrompegels vor und vergleicht den erfassten Prüfstrompegel mit einem in der Verarbeitungseinrichtung gespeicherten Sollstrompegel. Sofern der Prüfstrompegel innerhalb eines ersten Zeitintervalls dem Sollstrompegel entspricht oder über dem Sollstrompegel liegt, ist die Verarbeitungseinrichtung dazu ausgebildet, einen ersten Betriebszustand für das Sensormodul zu aktivieren. In diesem ersten Betriebszustand erfolgt eine Ausgabe eines Ausgabesignals, das einen Betrag einer physikalischen Größe repräsentiert, die von einem Sensor des Sensormoduls erfasst wird, als Strompegel an die Schnittstelle. Für den Fall, dass der Prüfstrompegel innerhalb des ersten Zeitraums unter dem Sollstrompegel liegt, ist die Verarbeitungseinrichtung dazu ausgebildet, einen weit Betriebszustand für das Sensormodul zu aktivieren. In diesem zweiten Betriebszustand erfolgt eine Ausgabe des Ausgabesignals als Spannungspegel an die Schnittstelle.

Bei einer Weiterbildung des Verfahrens ist vorgesehen, dass mit der Aktivierung des ersten Betriebszustands eine Speicherung eines ersten Zustandswerts in einem Betriebszustandsspeicher der Verarbeitungseinrichtung vorgenommen wird und dass mit der Aktivierung des zweiten Betriebszustands eine Speicherung eines zweiten Zustandswerts im Betriebszustandsspeicher der Verarbeitungseinrichtung vorgenommen wird und dass bei einer Inbetriebnahme des Sensormoduls vor einer Bereitstellung des Prüfbefehls ein Lesevorgang vorgenommen wird, um bei Vorliegen des ersten Zustandswerts im Betriebszustandsspeicher die erste Betriebsart zu aktivieren und um bei Vorliegen des zweiten Zustandswerts im Betriebszustandsspeicher die zweite Betriebsart zu aktivieren. Durch die als Lesevorgang bezeichnete Abfrage des Betriebszustandspeichers kann eine Inbetriebnahme des Sensormoduls beschleunigt werden, wenn ein Betriebszustand gespeichert ist: In diesem Fall können die Bereitstellung des Prüfstrompegels und der Abgleich des Prüfstrompegels mit dem Sollstrompegel innerhalb des ersten Zeitintervalls entfallen.

In weiterer Ausgestaltung des Verfahrens ist vorgesehen, dass die Verarbeitungseinrichtung eine Umschaltung vom zweiten Betriebszustand in den ersten Betriebszustand sowie eine Speicherung des ersten Zustandswerts im Betriebszustandsspeicher der Verarbeitungseinrichtung vornimmt, wenn die Spannungsausgabe innerhalb eines vorgegebenen zweiten Zeitintervalls oberhalb eines vorgegebenen Spannungspegels verbleibt.

Eine vorteilhafte Ausführungsform der Erfindung ist in der Zeichnung dargestellt. Hierbei zeigt:

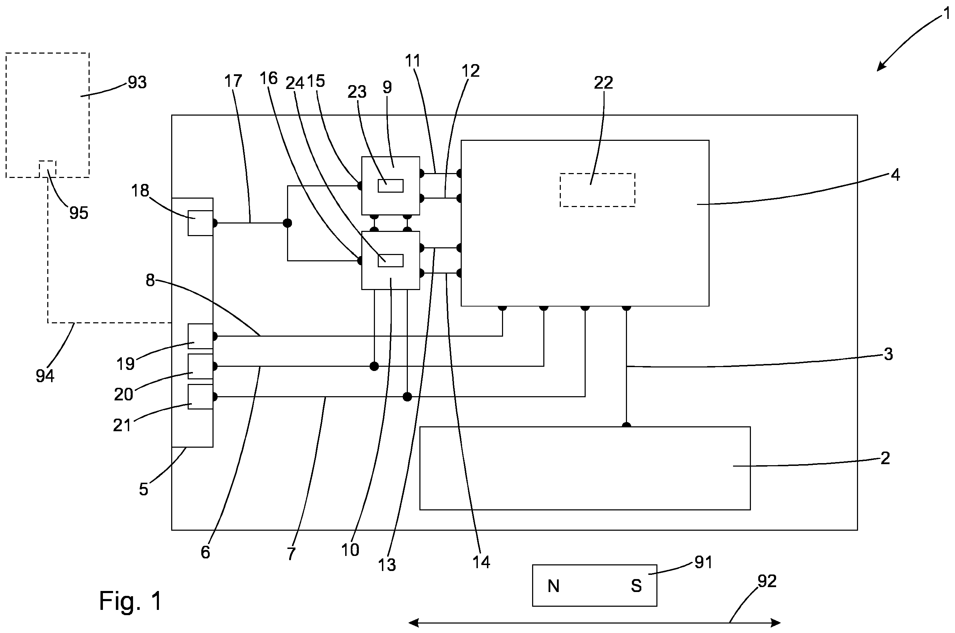

- Figur 1: eine streng schematische Darstellung eines Sensormoduls.

Ein in der Figur 1 streng schematisch dargestelltes Sensormodul 1 ist rein exemplarisch als Positionssensor zur Erfassung einer räumlichen Lage eines Permanentmagneten 91 ausgebildet, der längs eines Bewegungswegs 92 relativ zum Sensormodul 1 bewegt werden kann. Beispielsweise ist der Permanentmagnet 91 an einem nicht dargestellten, linearbeweglich verlagerbaren Schlitten angeordnet, der Bestandteil einer ebenfalls nicht dargestellten Produktionsanlage ist.

Die Aufgabe des Sensormoduls 1 besteht somit in der Erfassung eines vom Permanentmagneten 91 bereitgestellten Magnetfelds sowie der Ausgabe eines vom erfassten Magnetfeld abhängigen Sensorsignals an eine nur schematisch dargestellte übergeordnete Steuerung 93, die über eine Kabelverbindung 94 elektrisch mit dem Sensormodul 1 verbunden ist. Die übergeordnete Steuerung 93, die auch als Signalempfänger bezeichnet werden kann, weist eine Eingangsschnittstelle 95 auf, die beispielsweise zum Empfang von Messwerten des Sensormoduls 1, die als unterschiedliche elektrische Spannungspegel in einem Intervall von 0 Volt bis 10 Volt bereitgestellt werden, ausgebildet ist. Alternativ kann die Eingangsschnittstelle 95 zum Empfang von Messwerten des Sensormoduls 1, die als unterschiedliche elektrische Strompegel in einem Intervall von 4 mA bis 20 mA bereitgestellt werden, ausgebildet sein.

Für eine Erfassung des Magnetfelds des Permanentmagneten 91, das eine vom Sensormodul 1 zu erfassende physikalische Größe darstellt, weist das Sensormodul 1 einen Magnetfeldsensor 2 auf, bei dem sich beispielsweise um einen Hall-Sensor handeln kann. Der Magnetfeldsensor 2 ist über eine Sensorleitung 3 elektrisch mit einer Verarbeitungseinrichtung 4 verbunden. Die Verarbeitungseinrichtung 4 ist beispielsweise als Mikroprozessor ausgebildet und zur Abarbeitung eines gespeicherten Computerprogramms ausgebildet. Für die Speicherung des Computerprogramms und für eine Speicherung eines Betriebszustandswerts weist die Verarbeitungseinrichtung 4 einen Speicher 22 auf, der als Permanentspeicher ausgebildet ist und dazu ausgebildet ist, auch ohne eine elektrische Versorgung der Verarbeitungseinrichtung 4 die Speicherung des Computerprogramms und des Betriebszustandswerts zu gewährleisten.

Die Verarbeitungseinrichtung 4 steht elektrisch mit einer Schnittstelle 5 in Verbindung, an der die Kabelverbindung 94 angeschlossen ist.

Ausgehend von der Verarbeitungseinrichtung 4 erstrecken sich eine erste Versorgungsleitung 6, eine zweite Versorgungsleitung 7 sowie eine Kommunikationsleitung 8 bis zur Schnittstelle 5.

Ferner ist die Verarbeitungseinrichtung 4 elektrisch mit einer Stromquelle 9 sowie mit einer Spannungsquelle 10 verbunden. Hierzu erstrecken sich zwischen der Verarbeitungseinrichtung 4 und der Stromquelle 9 eine Stromsteuerleitung 11 und eine Stromsignalleitung 12. Zwischen der Verarbeitungseinrichtung 4 und der Spannungsquelle 10 erstrecken sich eine Spannungssteuerleitung 13 und eine Spannungssignalleitung 14. Hierbei ist vorgesehen, dass die Stromquelle 9 und die Spannungsquelle 10 elektrisch mit den beiden Versorgungsleitungen 6, 7 verbunden sind, um in Abhängigkeit von Steuersignalen der Verarbeitungseinrichtung 4 eine Bereitstellung eines elektrischen Stroms durch die Stromquelle 9 oder eine Bereitstellung einer elektrischen Spannung durch die Spannungsquelle 10 an die Schnittstelle 5 zu ermöglichen.

Die Stromsteuerleitung 11 dient zur Übermittlung von Stromsteuerbefehlen, die von der Verarbeitungseinrichtung 4 an die Stromquelle 9 übermittelt werden, um die Stromquelle 9 zu einer Stromabgabe an einem Ausgangsanschluss 15 der Stromquelle 9 zu veranlassen. Die Stromsignalleitung 12 dient zur Übertragung eines Stromsignals, das von einer internen Strommesseinheit 23 innerhalb der Stromquelle 9 bereitgestellt wird, an die Verarbeitungseinrichtung 4, wobei dieses Stromsignal den am Ausgangsanschluss 15 der Stromquelle 9 bereitgestellten elektrischen Strom repräsentiert.

Die Spannungssteuerleitung 13 dient zur Übermittlung von Spannungssteuerbefehlen, die von der Verarbeitungseinrichtung 4 an die Spannungsquelle 10 zu einer Spannungsabbau an einem Ausgangsanschluss 16 der Spannungsquelle 10 zu veranlassen. Die Spannungssignalleitung 14 dient zur Übertragung eines Spannungssignals, das von einer internen Spannungsmesseinheit 24 innerhalb der Spanungsquelle 10 bereitgestellt wird, an die Verarbeitungseinrichtung 4, wobei dieses Spannungssignal die am Ausgangsanschluss 16 der Spannungsquelle 10 bereitgestellte elektrische Spannung repräsentiert.

Wie der Darstellung der Figur 1 entnommen werden kann, sind die Ausgangsanschlüsse 15, 16 der Stromquelle 9 und der Spannungsquelle 10 mit einer gemeinsamen Ausgangsleitung 17 verbunden, die mit einem ersten Ausgabeanschluss 18 in der Schnittstelle 5 verbunden sind. Die Kommunikationsleitung 8, die beispielsweise zur Bereitstellung eines Ausgangssignals gemäß dem IO-Link-Kommunikationsprotokoll und/oder eines PNP-Schaltsignals und/oder eines NPN-Schaltsignals ausgebildet ist, ist mit einem zweiten Ausgabeanschluss 19 der Schnittstelle 5 verbunden.

Ferner ist vorgesehen, dass die erste Versorgungsleitung 6 mit einem ersten Versorgungsanschluss 20 in der Schnittstelle 5 verbunden ist und dass die zweite Versorgungsleitung 7 mit einem zweiten Versorgungsanschluss 21 in der Schnittstelle 5 verbunden.

Eine Funktionsweise des Sensormoduls 1 kann wie folgt beschrieben werden: zum Zeitpunkt einer ersten Inbetriebnahme des Sensormoduls 1 erfolgt die Herstellung der Kabelverbindung 94 zwischen der übergeordneten Steuerung 93 und dem Sensormodul 1. Hierdurch wird an den Versorgungsanschlüssen 20, 21 elektrische Energie bereitgestellt, durch die Verarbeitungseinrichtung 4 in die Lage versetzt wird, dass im Speicher gespeicherte Computerprogramm in einem nicht dargestellten Prozessorbereich schrittweise abzuarbeiten. Beispielhaft ist vorgesehen, dass das Computerprogramm vorsieht, vor einer Auswertung eines Sensorsignals des Magnetfeldsensors 2 eine Abfrage des als Bestandteil des Speichers 22 ausgebildeten Betriebszustandsspeichers vorzunehmen, um in Abhängigkeit von einem im Betriebszustandsspeicher gespeicherten Wert die weitere Vorgehensweise für die Verarbeitung und Ausgabe von Sensorsignalen des Magnetfeldsensors 2 durchzuführen.

Für den Fall, dass im Betriebszustandsspeicher ein Wert gespeichert ist, der dem ersten Betriebszustand für das Sensormodul 1 entspricht, beginnt die Verarbeitungseinrichtung mit der Verarbeitung von Sensorsignalen des Magnetfeldsensors 2, die mit Hilfe des Computerprogramms, vorzugsweise proportional zu einem Messbereich des Magnetfeldsensors 2, in Stromsteuersignale für Strompegel umgesetzt werden. Diese Strompegel sind in einem Intervall mit den Grenzen 4 mA und 20 mA angesiedelt. Hierbei kann vorgesehen sein, dass die untere Grenze von 4 mA einer unteren Intervallgrenze des Messbereichs des Magnetfeldsensors 2 entspricht und dass die obere Grenze von 20 mA einer oberen Intervallgrenze des Messbereichs des Magnetfeldsensors 2 entspricht. Beispielhaft ist vorgesehen, dass der Strompegel 4 mA ausgegeben wird, wenn sich der Permanentmagnet 91 längs des Bewegungswegs 92 gerade noch an einem gemäß der Darstellung der Figur 1 linken Ende eines Erfassungsbereichs des Magnetfeldsensors 2 befindet. Ferner kann beispielhaft vorgesehen sein, dass der Strompegel 20 mA ausgegeben wird, wenn sich der Permanentmagnet 91 längs des Bewegungswegs 92 gerade noch an einem gemäß der Darstellung der Figur 1 rechten Ende des Erfassungsbereichs des Magnetfeldsensors 2 befindet.

Das Stromsteuersignal wird von der Verarbeitungseinrichtung 4 über die Stromsteuerleitung 11 an die Stromquelle 9 bereitgestellt und dort in fest vorgegebener Weise in den entsprechenden Strompegel umgesetzt, wobei dieser Strompegel anschließend über die Ausgangsleitung 17 an den ersten Ausgabeanschluss 18 bereitgestellt wird. Eine Regelung des Strompegels erfolgt in der Verarbeitungseinrichtung 4 mit Hilfe von Signalen der Stromesseinheit 23, die über die Stromsignalleitung 12 den tatsächlich von der Stromquelle 9 ausgegebenen Strompegel an die Verarbeitungseinrichtung 4 übermittelt.

Für den Fall,9 dass im Betriebszustandsspeicher ein Wert gespeichert ist, der dem zweiten Betriebszustand für das Sensormodul 1 entspricht, beginnt die Verarbeitungseinrichtung mit der Verarbeitung von Sensorsignalen des Magnetfeldsensors 2, die mit Hilfe des Computerprogramms, vorzugsweise proportional zu einem Messbereich des Magnetfeldsensors 2, in Spannungssteuersignale für Spannungspegel umgesetzt werden. Die Vorgehensweise für die Ermittlung des Spannungssteuersignals ist weitgehend identisch zur Vorgehensweise für die Ermittlung des jeweiligen Stromsteuersignals, wobei abweichend vom Stromsteuersignal, das einen Strombereich von 4 mA bis 20 mA abdeckt, ein Spannungsbereich von 0 Volt bis 10 Volt abgedeckt wird. Das Spannungssteuersignal wird von der Verarbeitungseinrichtung 4 über die Spannungssteuerleitung 13 an die Spannungsquelle 10 bereitgestellt, die ihrerseits den gewünschten Spannungspegel über die Ausgangsleitung 17 an den ersten Ausgabeanschluss 18 zur Verfügung stellt. Eine Regelung des Spannungspegels erfolgt in der Verarbeitungseinrichtung 4 mit Hilfe von Signalen der Spannungsmesseinheit 24, die über die Spannungssignalleitung 14 den tatsächlich von der Spannungsquelle 10 ausgegebenen Spannungspegel an die Verarbeitungseinrichtung 4 übermittelt.

Für den Fall, dass im Betriebszustandsspeicher kein Wert gespeichert ist, sieht das Computerprogramm der Verarbeitungseinrichtung 4 vor, zunächst eine Ermittlung vorzunehmen, in welcher Weise eine Kommunikation mit der übergeordneten Steuerung 93 möglich ist. Hierzu ist vorgesehen, dass die Verarbeitungseinrichtung 4 die Bereitstellung eines Prüfstroms von der Stromquelle 9 an den Ausgabeanschluss 18 bewirkt. Dabei kann der Prüfstrom innerhalb des Intervalls von 4 mA bis 20 mA liegen. Bevorzugt ist vorgesehen, dass der Prüfstrom unterhalb der Intervallgrenze von 4 mA liegt, um zu vermeiden, dass der ausgegebene Prüfstrom in der übergeordneten Steuerung 93 als gültiges Messsignal verstanden wird. Besonders bevorzugt ist vorgesehen, dass der Prüfstrom im Bereich von 2 mA angesiedelt ist. Die Verarbeitungseinrichtung 4 ist dazu ausgebildet, den von der Stromquelle 9 tatsächlich am ersten Ausgabeanschluss 18 ausgegebenen Strom auf Basis der Signale der Stromesseinheit 23, die über die Stromsignalleitung 12 den tatsächlich von der Stromquelle 9 ausgegebenen Strompegel an die Verarbeitungseinrichtung 4 übermittelt werden, zu verarbeiten. Bei dieser Verarbeitung des Strompegels ist vorgesehen, innerhalb eines ersten Zeitintervalls, das beispielsweise 1 Sekunde betragen kann, den tatsächlichen Strompegel mit einem im Speicher 22 gespeicherten Strompegel zu vergleichen.

Für den Fall, dass der tatsächliche Strompegel innerhalb des ersten Zeitintervalls gleich oder größer als der gespeicherte Strompegel ist, nimmt die Verarbeitungseinrichtung 4 eine Umschaltung in den ersten Betriebszustand vor. Diese Umschaltung in den ersten Betriebszustand kann auch für den Fall vorgesehen sein, dass ein Durchschnittswert des tatsächlichen Strompegels innerhalb des ersten Zeitintervalls gleich oder größer als der gespeicherte Strompegel ist.

Für den Fall, dass der tatsächliche Strompegel innerhalb des ersten Zeitintervalls kleiner als der gespeicherte Strompegel ist, nimmt die Verarbeitungseinrichtung 4 eine Umschaltung in den zweiten Betriebszustand vor. Diese Umschaltung in den zweiten Betriebszustand kann auch für den Fall vorgesehen sein, dass ein Durchschnittswert des tatsächlichen Strompegels innerhalb des ersten Zeitintervalls kleiner als der gespeicherte Strompegel ist.

## Patentansprüche

1. Sensormodul (1) mit wenigstens einem Sensor (2), der zur Erfassung und Umwandlung einer physikalischen Größe, insbesondere aus der Gruppe: Druck, Temperatur, Magnetfeldstärke, Volumenstrom, Massenstrom, in ein elektrisches Sensorsignal ausgebildet ist, mit einer Verarbeitungseinrichtung (4), die zur Verarbeitung des elektrischen Sensorsignals in ein elektrisches Ausgabesignal ausgebildet ist und die eine Stromquelle (9) und eine Spannungsquelle (10) aufweist, und die in einem ersten Betriebszustand für eine Stromausgabe in Abhängigkeit von einem Signalpegel des Ausgabesignals und in einem zweiten Betriebszustand für eine Spannungsausgabe in Abhängigkeit von dem Signalpegel des Ausgabesignals ausgebildet ist und die elektrisch mit einem ersten Ausgabeanschluss (18) einer Schnittstelle (5), die zur Ankopplung eines Signalempfängers (93) ausgebildet ist, verbundenen ist, wobei die Verarbeitungseinrichtung (4) für eine Umschaltung vom ersten Betriebszustand in den zweiten Betriebszustand ausgebildet ist, wenn die Stromausgabe innerhalb eines vorgegebenen ersten Zeitintervalls unterhalb eines vorgegebenen Strompegels verbleibt.

2. Sensormodul (1) nach Anspruch 1, **dadurch gekennzeichnet, dass** die Verarbeitungseinrichtung (4) für eine Umschaltung vom zweiten Betriebszustand in den ersten Betriebszustand ausgebildet ist, wenn die Spannungsausgabe innerhalb eines vorgegebenen zweiten Zeitintervalls oberhalb eines vorgegebenen Spannungspegels verbleibt.

3. Sensormodul (1) nach Anspruch 1 oder 2, **dadurch gekennzeichnet, dass** die Verarbeitungseinrichtung (4) einen Betriebszustandsspeicher (22) aufweist, der für eine Speicherung des jeweils aktuellen Betriebszustands ausgebildet ist.

4. Sensormodul (1) nach Anspruch 1, 2 oder 3, **dadurch gekennzeichnet, dass** der Stromquelle (9) ein Stromsensor zugeordnet ist, der für eine Bereitstellung eines Stromsignals an die Verarbeitungseinrichtung (4) ausgebildet ist.

5. Sensormodul (1) nach Anspruch 1, 2, 3 oder 4, **dadurch gekennzeichnet, dass** der Spannungsquelle (10) ein Spannungssensor zugeordnet ist, der für eine Bereitstellung eines Spannungssignals an die Verarbeitungseinrichtung (4) ausgebildet ist.

6. Sensormodul (1) nach einem der vorhergehenden Ansprüche, **dadurch gekennzeichnet, dass** die Schnittstelle (5) einen zweiten Ausgabeanschluss (19) aufweist, der mit der Verarbeitungseinrichtung (4) elektrisch verbunden ist und der zur Bereitstellung eines Ausgabesignals aus der Gruppe: IO-Link, PNP-Schaltsignal, NPN-Schaltsignal, ausgebildet ist und/oder dass die Schnittstelle (5) einen ersten Versorgungsanschluss (20) und einen zweiten Versorgungsanschluss (21) für eine elektrische Versorgung der Verarbeitungseinrichtung (4) aufweist.

7. Sensormodul (1) nach einem der vorhergehenden Ansprüche, **dadurch gekennzeichnet, dass** die Verarbeitungseinrichtung (4) im ersten Betriebszustand für eine Stromausgabe in einem Intervall von 4 mA bis 20 mA und im zweiten Betriebszustand für eine Spannungsausgabe in einem Intervall von 0 Volt bis 10 Volt ausgebildet ist.

8. Verfahren zum Betreiben eines Sensormoduls (1) mit den Schritten: Bereitstellen eines Prüfbefehls von einer Verarbeitungseinrichtung (4) des Sensormoduls (1) an eine Stromquelle (9) des Sensormoduls (1), Bereitstellen eines Prüfstroms von der Stromquelle (9) an einen ersten Ausgabeanschluss (18) einer Schnittstelle (5) des Sensormoduls (1), die zur Ankopplung eines Signalempfängers (93) ausgebildet ist, Erfassen eines Prüfstrompegels mit der Verarbeitungseinrichtung (4) und Vergleichen des erfassten Prüfstrompegels mit einem in der Verarbeitungseinrichtung (4) gespeicherten Sollstrompegel, Aktivieren eines ersten Betriebszustands, bei dem ein Ausgabesignal als Strompegel an der Schnittstelle (5) bereitgestellt wird, wenn der Prüfstrompegel innerhalb eines vorgegebenen ersten Zeitintervalls über dem Sollstrompegel liegt oder Aktivieren eines zweiten Betriebszustands, bei dem das Ausgabesignal als Spannungspegel an der Schnittstelle bereitgestellt wird, wenn der Prüfstrompegel innerhalb eines vorgegebenen ersten Zeitintervalls unter dem Sollstrompegel liegt.

9. Verfahren nach Anspruch 8, **dadurch gekennzeichnet, dass** mit der Aktivierung des ersten Betriebszustands eine Speicherung eines ersten Zustandswerts in einem Betriebszustandsspeicher (22) der Verarbeitungseinrichtung (4) vorgenommen wird und dass mit der Aktivierung des zweiten Betriebszustands eine Speicherung eines zweiten Zustandswerts im Betriebszustandsspeicher der Verarbeitungseinrichtung (4) vorgenommen wird und dass bei einer Inbetriebnahme des Sensormoduls (1) vor einer Bereitstellung des Prüfbefehls ein Lesevorgang vorgenommen wird, um bei Vorliegen des ersten Zustandswerts im Betriebszustandsspeicher (22) die erste Betriebsart zu aktivieren und um bei Vorliegen des zweiten Zustandswerts im Betriebszustandsspeicher (22) die zweite Betriebsart zu aktivieren.

10. Verfahren nach Anspruch 9, **dadurch gekennzeichnet, dass** die Verarbeitungseinrichtung (4) eine Umschaltung vom zweiten Betriebszustand in den ersten Betriebszustand sowie eine Speicherung des ersten Zustandswerts im Betriebszustandsspeicher (22) der Verarbeitungseinrichtung (4) vornimmt, wenn die Spannungsausgabe innerhalb eines vorgegebenen zweiten Zeitintervalls oberhalb eines vorgegebenen Spannungspegels verbleibt.
